(19) Europäisches Patentamt
European Patent Office
Office européen des brevets

(11) Veröffentlichungsnummer: **0 251 116**
**A2**

# (12) EUROPÄISCHE PATENTANMELDUNG

(21) Anmeldenummer: 87108946.2

(22) Anmeldetag: 23.06.87

(51) Int. Cl.³: C 08 G 63/60
C 09 K 19/38

(30) Priorität: 02.07.86 DE 3622137

(43) Veröffentlichungstag der Anmeldung:
07.01.88 Patentblatt 88/1

(84) Benannte Vertragsstaaten:
BE DE FR GB NL SE

(71) Anmelder: BASF Aktiengesellschaft
Carl-Bosch-Strasse 38
D-6700 Ludwigshafen(DE)

(72) Erfinder: Kock, Hans-Jakob, Dr.
Benckiserstrasse 63
D-6700 Ludwigshafen(DE)

(72) Erfinder: Portugall, Michael, Dr.
Raiffeisenstrasse 7
D-6706 Wachenheim(DE)

(72) Erfinder: Hisgen, Bernd, Dr.
Goethestrasse 6
D-6703 Limburgerhof(DE)

(72) Erfinder: Mertes, Juergen, Dr.
Rheingoenheimer Strasse 57
D-6700 Ludwigshafen(DE)

(54) **Vollaromatische mesomorphe Polyester, deren Herstellung sowie Verwendung.**

(57) Vollaromatische, mesomorphe Polyester, die unterhalb 320°C eine homogene flüssig-kristalline Schmelze bilden, aufgebaut aus

a) mindestens 10 Mol.% wiederkehrenden Einheiten der Formel I

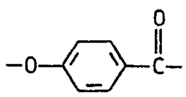

I

b) 1 bis 25 Mol.% wiederkehrenden Einheiten der Formel II

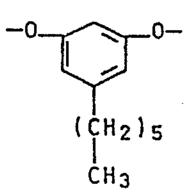

II

c) 5 bis 20 Mol.% mindestens einer der wiederkehrenden Einheiten der Formeln III bis VII

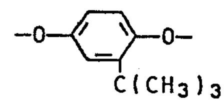

III

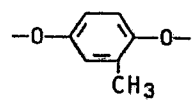

IV

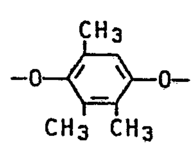

V

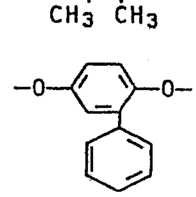

VI

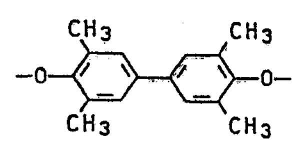

VII

./...

EP 0 251 116 A2

Croydon Printing Company Ltd.

d) 5 bis Mol.% wiederkehrenden Einheiten der Formel VIII

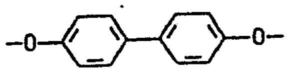

VIII

e) 10 bis 60 mol.% wiederkehrende Einheiten der Formel IX

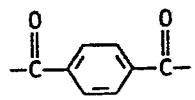

IX

wobei die Summe der molaren Anteile a), b), c), d) und e) jeweils 100 Mol.% ergibt, und das molare Verhältnis der Komponenten b+c+d) zur Komponente e) im Bereich von 0,9:1 bis 1,1:1 liegt.

O.Z. 0050/38530 BASF Aktiengesellschaft

Vollaromatische mesomorphe Polyester, deren Herstellung sowie Verwendung

Es wurden schon eine Reihe von vollaromatischen flüssig-kristallinen Polyestern beschrieben. Aus der US-PS 4 224 433 sind flüssig-kristalline Polyester bekannt, die sich aus Einheiten, die sich von 2,6-Dihydroxyanthrachinon, 3-Hydroxybenzoesäure, Terephthalsäure und/oder Isophthalsäure ableiten, bekannt. Die dort beschriebenen Polyester haben eine relativ hohe Schmelztemperatur und sind nur bei Temperaturen über 300°C verarbeitbar. Darüber hinaus ist ihre Wärmeformbeständigkeit verbesserungsbedürftig.

In der US-PS 4 219 461 werden flüssig-kristalline Polyester beschrieben, aufgebaut aus Einheiten, die sich von 4-Hydroxybenzoesäure, 2,6-Hydroxynaphthalincarbonsäure, Hydrochinon und Terephthalsäure ableiten. Solche Polyester haben jedoch keine ausreichende Wärmeformbeständigkeit. Das gleiche gilt für die aus der DE-OS bekannten flüssig-kristallinen Polyester, aufgebaut aus Einheiten, die sich von 4-Hydroxybenzoesäure, Terephthalsäure und/oder Isophthalsäure sowie 2,7-Dihydroxynaphthalin und gegebenenfalls Hydrochinon ableiten.

Aus der EP-Anmeldung 72 540 sind auch aromatische Polyester auf Basis Terephthalsäure, 4-Hydroxybenzoesäure und Alkylhydrochinon, das tertiäre Alkylreste mit mindestens 5 Kohlenstoffatomen als Substituenten hat, bekannt. Solche Polyester sind jedoch erst bei Temperaturen oberhalb 300°C verarbeitbar. Über ihre Wärmeformbeständigkeit werden keine Aussagen gemacht.

Es war deshalb die technische Aufgabe gestellt, vollaromatische flüssig-kristalline Polyester zu entwickeln, die niedrige Verarbeitungstemperaturen erlauben, jedoch gute Dauergebrauchseigenschaften bei erhöhter Temperatur haben und sich zudem durch eine geringe Eigenfarbe, eine glatte abriebfeste Oberfläche und gute Chemikalienbeständigkeit auszeichnen.

Diese Aufgabe wird gelöst durch vollaromatische mesomorphe Polyester, die unterhalb 320°C eine flüssig-kristalline fadenbildende Schmelze bilden, aufgebaut aus

a) mindestens 10 Mol.% wiederkehrenden Einheiten der Formel I

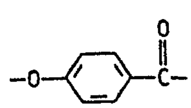 I

b) 1 bis 25 Mol.% wiederkehrenden Einheiten der Formel II

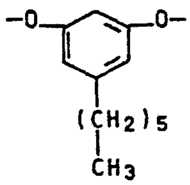

II

c) 5 bis 20 Mol.% mindestens einer der wiederkehrenden Einheiten der Formeln III bis VII

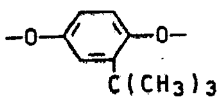

III

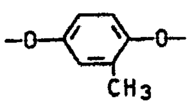

IV

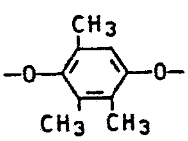

V

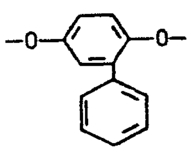

VI

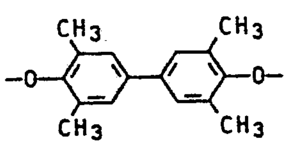

VII

d) 5 bis 15 Mol.% wiederkehrenden Einheiten der Formel VIII

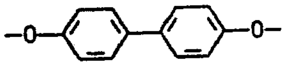

VIII

e) 10 bis 60 mol.% wiederkehrenden Einheiten der Formel IX

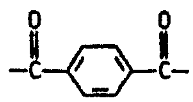

IX

wobei die Summe der molaren Anteile a), b), c) und e) jeweils 100 mol.% ergibt und das molare Verhältnis der Komponenten b) + c) + d) zur Komponente e) im Bereich von 0,9:1 bis 1,1:1 liegt.

Die neuen vollaromatischen flüssig-kristallinen Polyester haben den Vorteil, daß sie keiner hohen Verarbeitungstemperaturen bedürfen und darüber hinaus auch bei erhöhter Temperatur gute Dauergebrauchseigenschaften aufweisen. Ferner zeichnen sich die neuen vollaromatischen Polyester durch hohe Steifigkeit sowie Zähigkeit aus und haben eine glatte abriebfeste Oberfläche sowie eine geringe Eigenfarbe und gute Chemikalienbeständigkeit.

Es ist überraschend und bemerkenswert, daß flüssig-kristalline Polyester mit Einheiten, die sich von Hexylresorcin ableiten, eine hohe Teilkristallinität und Schmelzpunkten von über 280°C und < 300°C aufweisen und eine hohe Wärmeformbeständigkeit haben. Dies umso mehr als bei vergleichbaren Zusammensetzungen, die anstelle von Hexylresorcin Resorcin enthalten, eine geringe Teilkristallinität zu beobachten ist, der Schmelzpunkt unter 280°C liegt und zudem die Wärmeformbeständigkeit gering ist.

Der flüssig-kristalline Zustand der Polyester kann mit dem Polarisationsmikroskop nach einer in der DE-OS 2 520 189 beschriebenen Methode nachgewiesen werden. Zwischen gekreuzten Polarisatoren weisen die Polyester Schmelzen, die in einer Schichtdicke von 10 µm zwischen Glasplatten aufgetragen sind, Texturen auf, die einer mesomorphen Phase zugeordnet werden können.

Bevorzugte Ausgangsstoffe sind für wiederkehrende Einheiten der Formel

| | |
|---|---|
| I | 4-Hydroxybenzoesäure |
| II | 3-n-Hexylresorcin |
| III | t-Butylhydrochinon |
| IV | Methylhydrochinon |
| V | Trimethylhydrochinon |
| VI | Phenylhydrochinon |
| VII | 3,3'-5,5'-Tetramethyl-4,4'-dihydroxydiphenyl |
| VIII | 4,4'-Dihydroxydiphenyl |
| IX | Terephthalsäure. |

In besonders bevorzugten Polyestern ist ein Teil der Einheiten c), insbesondere bis zu 50 % ersetzt durch Einheiten der Formel X

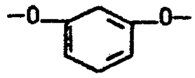

X

eine geeignete Ausgangsverbindung ist Resorcin.

Das molare Verhältnis der Summe der Dihydroxyverbindungen (b+c+d) zur Menge an Terephthalsäure liegt im Bereich von 0,9:1 bis 1,1:1, vorzugsweise von 0,95:1 bis 1,05:1 und insbesondere werden etwa äquimolare Menge an Dihydroxyverbindungen und Terephthalsäure eingesetzt.

Bevorzugte vollaromatische flüssig-kristalline Polyester haben eine Glastemperatur Tg von $\geq$ 110°C. Die Glastemperatur soll dabei gemessen werden nach der DSC-Methode, wie sie beschrieben ist in Makromolekulare Chemie, 127 (1969), Seiten 1 ff. Die vollaromatischen flüssig-kristallinen Polyester nach der Erfindung bilden bei einer Temperatur $\geq$ 320°C, insbesondere $\geq$ 300°C eine flüssig-kristalline fadenbildende Schmelze. Bevorzugt sind flüssig-kristalline Polyester, die bei einer Temperatur von $\geq$ 280°C und $\leq$ 300°C Teilkristallinität aufweisen, die auch bei der Verarbeitung mit hoher Abkühlrate in den Formmassen erhalten bleibt. Die Schubmodulmessungen werden nach DIN 53 445 durchgeführt.

Die erfindungsgemäßen Polyester sind erhältlich durch Arbeitsweisen, wie sie beispielsweise in den US-PSen 4 375 530 und 4 118 372 beschrieben sind.

Besonders vorteilhaft erhält man die erfindungsgemäßen Polyester durch Umsetzen der vorgenannten Ausgangsstoffe in nichtderivatisierter Form unter Verwendung von Anhydriden, niederer Fettsäuren, z.B. mit 2 bis 4 Kohlenstoffatomen, insbesondere Essigsäureanhydrid und gegebenenfalls unter Mitverwendung von Katalysatoren bei erhöhter Temperatur in einem Einstufenverfahren. Hierbei werden die trockenen Ausgangsverbindungen zusammen mit überschüssigem Fettsäureanhydrid, vorteilhaft einem mindestens 5 %igen molaren Überschuß, vorzugsweise 5 bis 60 mol.%, bezogen auf die vorhandenen Hydroxygruppen, in einer Inertgasatmosphäre auf Rückflußtemperatur erhitzt. Das Reaktionsgemisch wird dabei z.B. bis zu höchstens 5 Stunden, vorzugsweise bis zu 2 Stunden auf eine Temperatur von 150 bis 200°C gehalten, anschließend wird die Temperatur z.B. innerhalb von 2 bis 2 1/2 Stunden auf 300 bis 350°C gesteigert. Fettsäureanhydrid und Fettsäure werden abdestilliert. Zur Vervollständigung der Reaktion ist es zweckmäßig, gegen Ende der Kondensation verminderten Druck z.B. bis zu 5 mbar anzuwenden.

Bemerkenswert und nicht vorherzusehen bei der Anwendung von einer einzigen Reaktionsstufe ist zunächst die problemlose und vollständige Kondensation auch ohne Katalysatorzusatz zu den gewünschten Polymeren in einer relativ kurzen Zeit. Dies ist umso bemerkenswerter, daß durch die Vielzahl chemisch unterschiedlicher Hydroxygruppen eine Abstufung der Reaktivitäten und damit ein mangelhafter polymerer Aufbau zu erwarten wäre.

Die so erhaltenen, vollaromatischen flüssig-kristallinen Polyester werden vorteilhaft im festen Zustand, z.B. bei einer Temperatur von 150 bis 250°C weiter kondensiert, bis zur gewünschten Viskositat. Diese Festphasenkondensation führt man vorteilhaft unter vermindertem Druck oder unter Mitverwendung von Inertgasen, insbesondere Stickstoff, durch. Diese Nachkondensation in fester Phase kann sowohl vor als auch nach einer thermoplastischen Verarbeitung erfolgen.

In bevorzugten vollaromatischen Polyester nach der Erfindung bleibt die Teilkristallinität auch bei der Verarbeitung aus der Schmelze mit Abkühlraten von > 300°C/Min. auf eine Temperatur $T < T_g$ erhalten. Bevorzugte, vollaromatische Polyester weisen bei 180°C noch mindestens 50 % des Schubmodulwertes bei der Glastemperatur Tg auf. Bevorzugt sind auch vollaromatische Polyester, die bei 230°C noch mindestens 20 % des Schubmodulwertes bei der Glastemperatur Tg haben.

Die erfindungsgemäßen vollaromatischen flüssig-kristallinen Polyester eignen sich zur Herstellung von Fäden, Folien, Schäumen, technischen Formteilen durch Spritzguß oder Extrusion sowie von Überzugsmassen.

Die Erfindung sei an folgenden Beispielen veranschaulicht.

<u>Beispiel 1</u>

0,2 mol (30,3 Mol.%) Terephthalsäure, 0,26 mol (39,4 Mol.%) 4-Hydroxybenzoesäure, 0,04 mol (6,1 Mol.%) 4,4'-Dihydroxybiphenyl, 0,13 mol (19,7 Mol.%) Methylhydrochinon, 0,03 mol (4,5 Mol.%) Hexylresorcin sowie 0,86 mol Acetanhydrid wurden in einem Kolben unter Rühren unter Stickstoffatmosphäre in einem Metallbad auf 100°C erhitzt. Die Temperatur wurde dann in 30 Min. auf 150°C, in weiteren 100 Min. auf 200°C und anschließend in 120 Min. auf die Endtemperatur von 350°C erhöht.

Anschließend wurde der Druck auf 560 mbar und dann alle 10 Min. auf die Hälfte verringert. Das Endvakuum betrug 15 mbar. Man erhielt eine viskose mesomorphe Schmelze. Aus DSC-Messungen ergab sich eine Glasübergangstemperatur von 115°C und eine Schmelztemperatur von 295°C (Peakmaximum). Die

inhärente Viskosität betrug 2,5 dl/g, gemessen in 0,1 Gew.% Lösung in Pentafluorphenol bei 60°C. Der Schubmodul bei 190°C betrug ca. 56 % des Wertes bei der Glastemperatur (bestimmt nach DIN 53 455).

Der Schubmodul bei 230°C betrug noch 22 % des Schubmodulwertes bei Tg.

Vergleichsbeispiel V-1

0,2 mol (30,3 Mol.%) Terephthalsäure, 0,26 mol (34,4 Mol.%) 4-Hydroxybenzoesaure, 0,04 mol (6,1 Mol.%) 4,4'-Dihydroxybiphenyl, 0,13 mol (19,7 Mol.%) Methylhydrochinon, 0,03 mol (9,5 Mol.%) Resorcin sowie 0,86 mol Acetanhydrid wurden wie in Beispiel 1 beschrieben umgesetzt.

Aus DSC-Messungen ergab sich eine Glasübergangstemperatur von 114°C und eine Schmelztemperatur von 277°C. Wie Tabelle 1 zeigt, war die Wärmeformbeständigkeit geringer im Vergleich zum Beispiel 1 mit Hexylresorcin.

Tabelle 1

| Beispiel | Tg °C | Tm °C | G' (190°C) / G' (Tg) | G' (230°C) / G' (Tg) |
|---|---|---|---|---|
| 1 | 115 | 295 | 0,56 | 0,22 |
| V-1 | 114 | 277 | 0,45 | 0,1 |
| 2 | 130 | 280 | 0,6 | 0,28 |

Beispiel 2

0,2 mol Terephthalsäure, 0,26 mol 4-Hydroxybenzoesäure, 0,04 mol 4,4'-Dihydroxybiphenyl, 0,03 mol Hydrochinon, 0,1 mol Methylhydrochinon, 0,03 mol Hexylresorcin sowie 0,86 mol Acetanhydrid wurden wie in Beispiel 1 beschrieben umgesetzt.

Die Endtemperatur betrug 330°C, das Endvakuum 12 mbar. Aus DSC-Messungen ergaben sich eine Glastemperatur von 130°C und eine Schmelztemperatur von 280°C (Peakmaximum). Die inhärente Viskosität betrug 2,3 dl/g. Der Schubmodul bei 190°C betrug 60 % des Wertes bei der Glasübergangstemperatur. Bei 230°C betrug der Schubmodul noch 28 % des Wertes bei Tg.

Patentansprüche

1. Vollaromatische, mesomorphe Polyester, die unterhalb 320°C eine homogene flüssig-kristalline Schmelze bilden, aufgebaut aus

a) mindestens 10 Mol.% wiederkehrenden Einheiten der Formel I

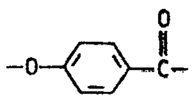

I

b) 1 bis 25 Mol.% wiederkehrenden Einheiten der Formel II

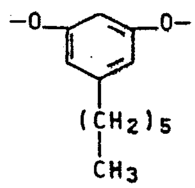

II

c) 5 bis 20 Mol.% mindestens einer der wiederkehrenden Einheiten der Formeln III bis VII

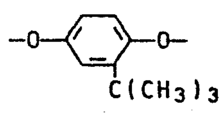

III

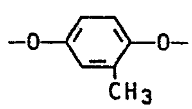

IV

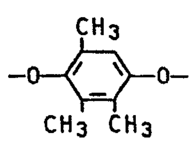

V

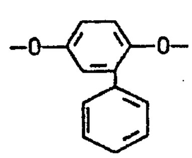

VI

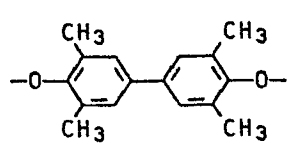

VII

d) 5 bis 15 Mol.% wiederkehrenden Einheiten der Formel VIII

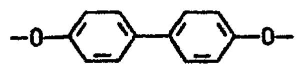

VIII

e) 10 bis 60 mol.% wiederkehrenden Einheiten der Formel IX

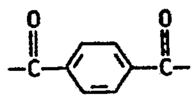

IX

wobei die Summe der molaren Anteile a), b), c), d) und e) jeweils 100 Mol.% ergibt und das molare Verhältnis der Komponenten b+c+d) zur Komponente e) im Bereich von 0,9:1 bis 1,1:1 liegt.

2. Vollaromatische mesomorphe Polyester nach Anspruch 1, <u>dadurch gekennzeichnet</u>, daß ein Teil der Einheiten c) ersetzt ist durch wiederkehrende Einheiten der Formel X

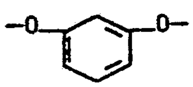

X

3. Vollaromatische mesomorphe Polyester nach den Ansprüchen 1 und 2, <u>dadurch gekennzeichnet</u>, daß sie bei einer Temperatur > 280°C und < 300°C Teilkristallinität aufweisen, die auch bei der Verarbeitung mit Abkühlraten von > 300°C pro Minute auf eine Temperatur unterhalb der Glasübergangstemperatur erhalten bleibt.

4. Vollaromatische mesomorphe Polyester nach den Ansprüchen 1 bis 3, <u>dadurch gekennzeichnet</u>, daß der Schubmodul bei 190°C noch mindestens 50 % des Schubmoduls bei der Glasübergangstemperatur Tg beträgt.

5. Vollaromatische mesomorphe Polyester nach den Ansprüchen 1 bis 3, <u>dadurch gekennzeichnet</u>, daß der Schubmodul bei 230°C noch mindestens 20 % des Schubmoduls bei der Glasübergangstemperatur Tg beträgt.

6. Verfahren zur Herstellung von Polyestern nach den Ansprüchen 1 bis 5, <u>dadurch gekennzeichnet</u>, daß die Monomeren als nichtderivatisierte Hydroxy- bzw. Carboxyverbindungen eingesetzt werden und unter Zusatz von Fettsäureanhydriden bei einer Temperatur von 150 bis 350°C in einer einzigen Reaktionsstufe unter Abdestillieren von Fettsäure und Fettsäureanhydrid umgesetzt werden.

7. Verfahren nach Anspruch 6, dadurch gekennzeichnet, daß man die so erhaltenen Polyester in fester Phase bei einer Temperatur von 150 bis 250°C nachkondensiert.

8. Verwendung von vollaromatischen Polyestern nach den Ansprüchen 1 bis 7 zur Herstellung von Fasern, Folien, Formteilen, Schaumstoffen und Überzügen.

9. Formkörper, erhältlich aus vollaromatischen Polyestern nach den Ansprüchen 1 bis 5 als wesentlichen Komponenten.